(19) Europäisches Patentamt

European Patent Office

Office européen des brevets

(11) Veröffentlichungsnummer: **0 292 659 B1**

# (12) EUROPÄISCHE PATENTSCHRIFT

(45) Veröffentlichungstag der Patentschrift: **29.07.92**

(21) Anmeldenummer: **88103966.3**

(22) Anmeldetag: **12.03.88**

(51) Int. Cl.⁵: **F16K 1/226**, F16K 27/02

(54) **Klappenventil.**

(30) Priorität: **25.05.87 DE 8707484 U**

(43) Veröffentlichungstag der Anmeldung:
**30.11.88 Patentblatt 88/48**

(45) Bekanntmachung des Hinweises auf die
Patenterteilung:
**29.07.92 Patentblatt 92/31**

(84) Benannte Vertragsstaaten:
**BE CH FR GB IT LI**

(56) Entgegenhaltungen:
**AU-B- 458 965**
**DE-A- 2 027 775**
**US-A- 3 420 498**

(73) Patentinhaber: **GARLOCK GMBH GESCHÄFTS-
BEREICH ARMATUREN
Welserstrasse 1
W-4040 Neuss 1 (Uedesheim)(DE)**

(72) Erfinder: **Warlich, Lutz P., Dipl.-Ing.
Grafenberger Allee 369
W-4000 Düsseldorf(DE)**

(74) Vertreter: **König, Reimar, Dr.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)**

**Beschreibung**

Die Erfindung betrifft ein Klappenventil gemäß dem Oberbegriff des Patentanspruchs 1.

Klappenventile dieser Art sind z.B. aus der DE-A-2 027 775 bekannt und weisen immer dann ein in der Achsebene geteiltes Gehäuse auf, wenn im Gehäuse eine ungeteilte, mit seitlichen Flanschen versehene Gehäuseauskleidung, vorzugsweise aus einem korrosiven Medien widerstehenden Material zwischen dem Gehäuse und einer das Schließorgan bildenden Klappenscheibe angeordnet ist. Diese Gehäuseauskleidung dient als Abdichtung und soll die Gehäusehälften gegen das das Klappenventil durchströmende Medium schützen. Im Falle des mechanischen Bruches dieser Gehäuseauskleidung kann korrosives Medium zwischen den Gehäusehälften austreten. Umgekehrt kann aggressive Umluft zwischen die Gehäusehälften eintreten und einen chemischen Angriff zwischen der Gehäuseauskleidung und dem Gehäuse selbst einleiten.

Der Erfindung liegt daher die Aufgabe zugrunde, eine Dichtung zwischen den Gehäuseteilen- bzw. -hälften zu schaffen, die ein Eindringen von gasförmigen oder flüssigen Medien von außen und ein Austreten von gasförmigen oder flüssigen Medien von innen entlang den einander gegenüberliegenden Berührungsflächen des Gehäuses sicher verhindert.

Diese Aufgabe wird gemäß den Merkmalen des Kennzeichens des Anspruchs 1 mit einer Dichtung dadurch gelöst, daß in vorzugsweise achsparallel verlaufenden Nuten der einander gegenüberliegenden Berührungsflächen des Gehäuses stabförmige Dichtelemente aus verformbarem Material angeordnet sind. Vorzugsweise befinden sich jeweils einander gegenüberliegende Nuten in den Berührungsflächen und bestehen die Dichtelemente aus Polytetrafluoräthylen.

Die stabförmigen Dichtelemente werden beim Zusammenbau zwischen den Gehäusehälften eingeklemmt und verhindern den Durchtritt eines flüssigen oder gasförmigen Mediums in beiden Richtungen. Aufgrund der elastischen und gegebenenfalls auch plastischen Verformbarkeit der Dichtelemente werden sie in axialer Richtung gegen die Flansche der Gehäuseauskleidung gepreßt und bewirken auch hier eine einwandfreie Abdichtung.

Die Erfindung wird nachstehend anhand eines in der Zeichnung dargestellten Ausführungsbeispiels des näheren beschrieben. In der Zeichnung zeigen:

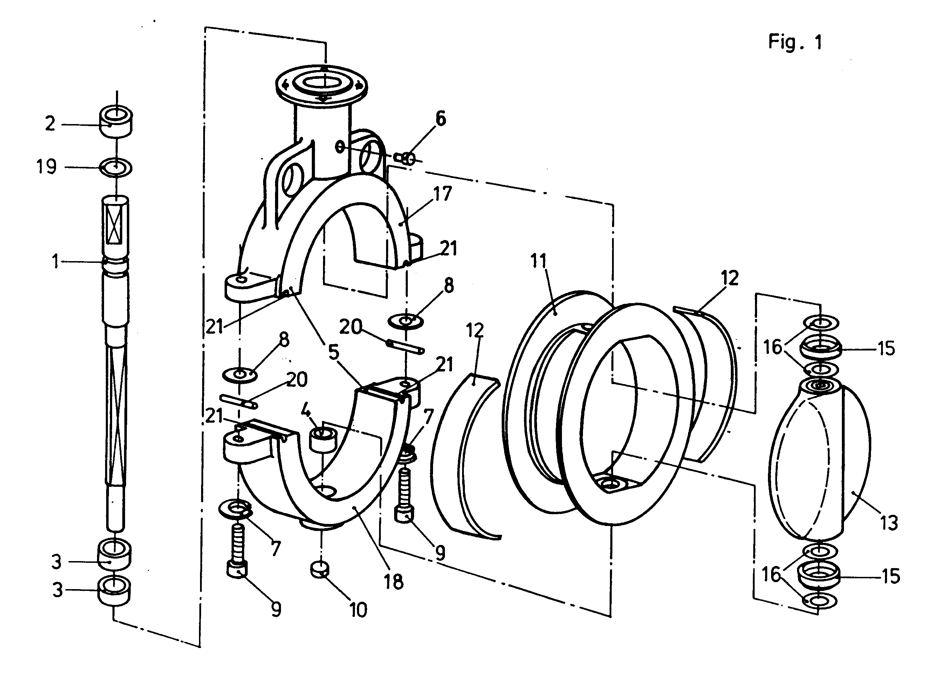

Fig. 1 eine auseinandergezogene perspektivische Darstellung des erfindungsgemäßen Klappenventils

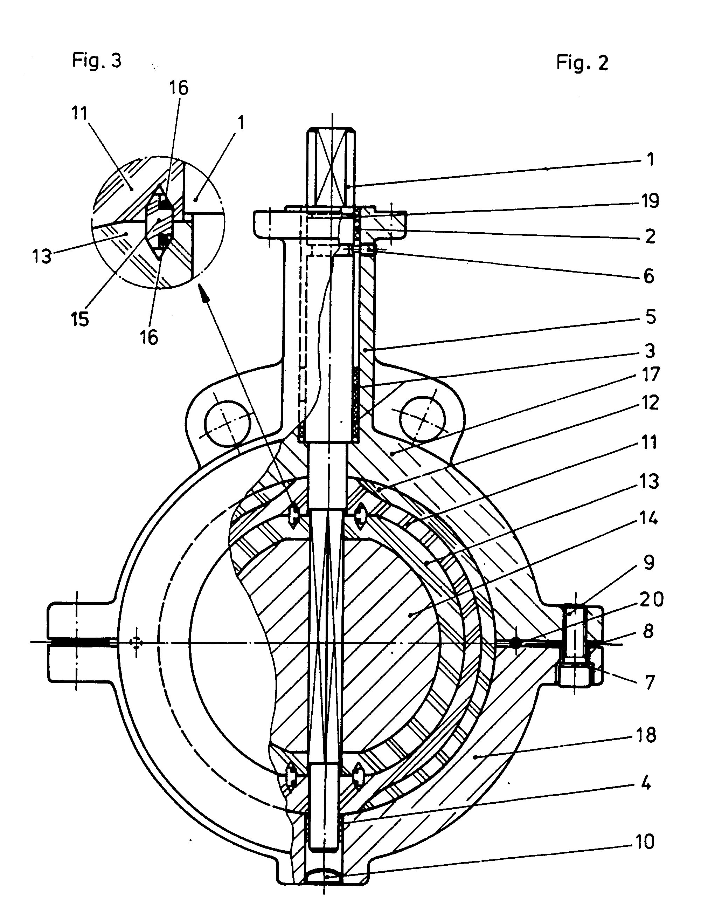

Fig. 2 das Klappenventil in einer Seitenansicht, teilweise im Schnitt und

Fig. 3 eine vergrößerte Darstellung der erfindungsgemäßen Dichtung.

Eine Schaltwelle 1 ist mittels eines oberen Schaltwellenlagers 2, zweier mittlerer Schaltwellenlager 3 und eines unteren Schaltwellenlagers 4 in einem Gehäuse 5, das aus einer oberen Gehäusehälfte 17 und einer unteren Gehäusehälfte 18 besteht, drehbar gelagert. Die Schaltwelle 1 ist gegen ein axiales Verschieben durch eine in eine Nut in der Schaltwelle eingreifende Sicherungsschraube 6 gesichert. Die Gehäusehälften 17, 18 sind miteinander mittels Schrauben 9 verschraubt. Unter dem Kopf jeder Gehäuseschraube 9 liegt ein Federring 7, um die Gehäuseschrauben 9 gegen unbeabsichtigtes Lockern zu sichern. Zwischen den Teilflächen der Gehäusehälften 17, 18 befinden sich Unterlegscheiben 8 aus Blei.

Eine Verschlußkappe 10 schützt die Schaltwelle 1 und das untere Schaltwellenlager 4 gegen von außen eindringenden Schmutz. Im Gehäuse 5 ist eine mit Flanschen versehene Gehäuseauskleidung 11 angeordnet; sie besteht aus einem gegen das das Klappenventil durchströmende Medium widerstandsfähigen Material und ist mit Bohrungen für die Schaltwelle 1 versehen. Elastomer-Halbschalen 12 sind beiderseits der Gehäuseauskleidung 11 zwischen dem Gehäuse 5 und dieser Gehäuseauskleidung 11 angeordnet.

Ein metallischer Klappenscheibenkern 14 steckt drehfest auf der Schaltwelle 1 und ist ebenfalls mit einem, die eigentliche Klappenscheibe 13 bildenden Material umkleidet, das wie die Gehäuseauskleidung 11 widerstandsfähig gegen das das Klappenventil durchströmende Medium ist. Die Abdichtung zwischen der Klappenscheibe 13 und der Gehäuseauskleidung 11 besteht aus einem Dichtring 15 aus Polytetrafluoräthylen und zusätzlichen O-Ringdichtungen 16 aus synthetischem Kautschuk.

Eine weitere O-Ringdichtung 19 ist am austrittsseitigen Ende der Schaltwelle 1 angeordnet. Auch diese O-Ringdichtung 19 besteht aus synthetischem Kautschuk.

In den Berührungsflächen der Gehäusehälften 17, 18 befinden sich achsparallel verlaufende, einander gegenüberliegende, sich ergänzende Nuten 21, in die ein Dicht- und Sicherungselement 20 eingelegt ist. Dieses Dichtelement 20 besteht aus einem elastisch und gegebenenfalls plastisch verformbaren Material, vorzugsweise Polytetrafluoräthylen und ist so bemessen, daß beim Anziehen der Gehäuseschrauben 9 und daraus folgender Verformung der Unterlegscheiben 8 ein ausreichendes Verspannen eintritt und sich die Enden der Dichtelemente 20 gegen die Flansche der Gehäuseauskleidung 11 legen. Auf diese Weise läßt sich eine sichere Abdichtung des Gehäuseinneren gegen Austritt und Eintritt gasförmiger oder flüssiger Medien erreichen.

**Patentansprüche**

1. Klappenventil mit einem in eine obere Gehäusehälfte (17) und eine untere Gehäusehälfte (18) geteilten Gehäuse, mit einer zwischen den Gehäusehälften (17, 18) angeordneten, mit zwei in axialer Richtung beabstandeten stirnseitigen Flanschen versehenen Gehäuseauskleidung (11) und einer auf einer die Gehäuseauskleidung (11) und die Gehäusehälften (17, 18) durchdringenden Schaltwelle (1) angeordneten Klappenscheibe (13), gekennzeichnet durch in Nuten (21) der einander gegenüberliegenden Berührungsflächen der Gehäusehälften (17, 18) dichtend angeordnete, mit ihren Enden dichtend an den Flanschen der Gehäuseauskleidung (11) anliegende, stabförmige Dichtelemente (20) aus verformbarem Material.

2. Klappenventil nach Anspruch 1, dadurch gekennzeichnet, daß jeweils einander gegenüberliegende komplementäre Nuten (21) in den Berührungsflächen angeordnet sind.

3. Klappenventil nach Anspruch 1 oder 2, dadurch gekennzeichnet, daß die Dichtelemente (20) aus Polytetrafluoräthylen bestehen.

4. Klappenventil nach einem der Ansprüche 1 bis 3, dadurch gekennzeichnet, daß die Nuten (21) achsparallel verlaufen.

**Claims**

1. A flap valve having a housing divided into an upper housing half (17) and a lower housing half (18) with a housing lining (11) arranged between the housing halves (17, 18) and provided with two lateral flanges spaced in the axial direction, and a butterfly disc (13) arranged on a control shaft (1) passing through the housing lining (11) and the housing halves (17, 18), characterised by rod-shaped sealing elements (20) of deformable material arranged sealingly in grooves (21) in the opposed contact surfaces of the housing halves (17, 18) with their ends bearing sealingly against the flanges of the housing lining (11).

2. A flap valve according to claim 1, characterised in that complementary grooves (21) are arranged opposite one another in the contact surfaces.

3. A flap valve according to claim 1 or claim 2, characterised in that the sealing elements (20) are of polytetrafluoroetheylene.

4. A flap valve according to any one of claims 1 to 3, characterised in that the grooves (21) extend paraxially.

**Revendications**

1. Vanne papillon comportant un boîtier de vanne divisé en une moitié supérieure (17) et une moitié inférieure (18), un revêtement de boîtier, agencé entre les moitiés de boîtier (17, 18) et équipé de deux brides frontales écartées selon une direction axiale, et un disque papillon (13) monté sur un arbre de commande (1) qui traverse le revêtement de boîtier (11) ainsi que les moitiés de boîtier (17, 18), caractérisée par des éléments d'étanchéité (20) en forme de barettes, en un matériau déformable, agencés de manière à étancher dans des rainures (21) pratiquées dans les surfaces de contact opposées des moitiés de boîtier (17, 18), éléments d'étanchéité (20) dont les extrémités viennent en contact de façon à étancher avec les brides du revêtement de boîtier (11).

2. Vanne papillon selon la revendication 1, caractérisée en ce que les rainures (21) opposées pratiquées dans les surfaces de contact sont chaque fois complémentaires.

3. Vanne papillon selon la revendication 1 ou 2, caractérisée en ce que les éléments d'étanchéité (20) consistent en polytétrafluoroéthylène.

4. Vanne papillon selon l'une des revendications 1 à 3, caractérisée en ce que les rainures (21) sont parallèles à l'axe.

Fig. 1

Fig. 3

Fig. 2

11

16

1

13

15

16

1

19

2

6

5

3

17

12

11

13

14

9

20

8

7

18

4

10